# FASCICULE DE BREVET EUROPEEN

(11) **EP 3 400 265 B1**
(45) Date de publication et mention de la délivrance du brevet: **03.08.2022**
(21) Numéro de dépôt: 17713721.3
(22) Date de dépôt: 28.02.2017
(51) Int. Cl.: C09D 11/50, B41M 3/14

(54) **PROCEDE DE MARQUAGE LUMINESCENT**
VERFAHREN ZUR LUMINESZENZMARKIERUNG
LUMINESCENT MARKING METHOD

(30) Priorité: 31.03.2016 FR 1652773
(43) Date de publication de la demande: 14.11.2018
(73) Titulaire: Commissariat à l'Énergie Atomique et aux Énergies Alternatives, 75015 Paris (FR)
(72) Inventeur: DE SOUSA NOBRE, Sonia, 38950 Saint Martin Le Vinoux (FR); BERNE, Philippe, 38000 Grenoble (FR); YAHIAOUI, Sakina, 38220 Vizille (FR)
(74) Mandataire: Cabinet Laurent & Charras
(86) Numéro de dépôt international: PCT/FR2017/050443
(87) Numéro de publication internationale: WO 2017/168064

(56) Documents cités:
- WO-A1-2014/041264
- WO-A2-2006/076616
- AU-A4- 2013 100 171
- CN-A- 103 642 319

## Description

### DOMAINE DE L'INVENTION

La présente invention concerne un procédé mettant en œuvre une encre luminescente pour marquer un substrat. Cette encre comprend un luminophore, mais également un absorbeur métallique de taille nanométrique.

Les domaines d'utilisation de la présente invention concernent notamment le traçage et la lutte anti-contrefaçon d'objets pouvant être réalisés en métal, en plastique ou en céramique.

### ETAT ANTERIEUR DE LA TECHNIQUE

La contrefaçon touche de nombreux domaines, tels que l'aéronautique, l'industrie du luxe, les jouets, l'horlogerie, la cosmétique, les médicaments, les montures de lunettes, ou les pièces automobiles par exemple.

La vente par correspondance via internet a amplifié la contrefaçon dont l'impact se fait ressentir à plusieurs niveaux, notamment :
- au niveau économique parce qu'elle représente une concurrence déloyale pour les entreprises, générant une perte d'emplois
- au niveau de la santé et de la sécurité du grand public puisque les normes de conformité des produits ne sont plus respectées.

En outre, en l'absence d'outils adéquats, la démocratisation de la fabrication additive par impression tridimensionnelle va certainement amplifier ce phénomène.

Actuellement il existe de nombreux dispositifs permettant d'authentifier des produits dans le cadre de la lutte anti-contrefaçon. En général ces dispositifs sont basés sur des traceurs qui peuvent être divisés en trois familles :
- les traceurs détectables avec les sens humains ;
- les traceurs détectables au moyen d'un outil ;
- les traceurs détectables en laboratoire.

Les traceurs luminescents font partie des traceurs les plus utilisés est le traceur luminescent. Ils s'avèrent particulièrement intéressants car, en fonction de la quantité utilisée, ils sont complètement invisibles à l'œil nu sous la lumière ambiante. En revanche, ils peuvent être détectés par l'œil humain, par un outil portable ou par un outil de laboratoire lorsqu'ils sont soumis à une excitation déterminée, souvent dans la région des ultra-violets.

A titre d'exemple, le document WO 2014/041264 décrit le marquage par frittage laser d'un substrat, tel que le verre ou le métal. Ce procédé met en œuvre une composition luminescente comprenant généralement un matériau luminescent, un matériau de fritte, et un absorbeur.

Dans ce procédé, le marqueur interagit avec le matériau de fritte, qui fond lors du frittage laser par récupération de la chaleur emmagasinée par l'absorbeur.

Cependant, la qualité du marquage peut être impactée par la potentielle instabilité thermique du marqueur lorsque le matériau de fritte fond, entrainant la perte de ses propriétés de luminescence initiales.

La présente invention permet de remédier à cette problématique grâce à un procédé mettant en œuvre une encre de marquage ne comprenant pas de matériau de fritte, mais un absorbeur de taille nanométrique. La taille de l'absorbeur permet de réaliser un marquage dans des conditions plus clémentes que les techniques conventionnelles de frittage.

### EXPOSE DE L'INVENTION

La présente invention concerne procédé impliquant une encre de marquage luminescente. Cette encre comprend un mélange physique d'au moins deux différents types de particules, à savoir un luminophore et un absorbeur.

L'encre de marquage mise en œuvre comprend :
- des particules d'au moins un luminophore ;
- au moins un absorbeur constitué de nanoparticules métalliques ;
- un solvant ;
l'encre étant dépourvue de matériau de fritte.

Le luminophore peut notamment être choisi dans le groupe comprenant les composés inorganiques suivants :
- les oxydes, notamment: CaO:Bi³⁺; CaO:Cd²⁺ ; CaO:Cu⁺ ; CaO:Eu³⁺ ; CaO:Eu³⁺,Na⁺ ; CaO:Mn²⁺ ; CaO:Pb²⁺ ; CaO:Sb³⁺ ; CaO:Sm³⁺ ; CaO:Tb³⁺ ; CaO:Tl⁺ ; CaO:Zn²⁺ ; ZnO:Al^{3+,}Ga³⁺ ; ZnO:Ga³⁺ ; ZnO:S ; ZnO:Se ; ThO2:Eu³⁺ ; ThO₂:Pr³⁺ ; ThO₂:Tb³⁺ ; Y₂O₃:Bi³⁺ ; Y₂O₃:Er3⁺ ; Y₂O₃:Eu³⁺ ; Y₂O₃:Ho³⁺ ; Y₂O₃:Tb³⁺ ; La₂O₃:Bi3⁺ ; La₂O₃:Eu³⁺ ; La₂O₃:Pb ; LiInO₂:Eu³⁺ ; LiInO₂:Sm³⁺ ; LiLaO₂:Eu³⁺ ; NaYO₂:Eu³⁺ ; CaTiO₃:Pr³⁺ ; CaGeO₃:Mn²⁺ ; Mg₂TiO₄:Mn4⁺ ; Zn₂GeO₄:Mn2⁺ ; YVO₄:Eu³⁺ ; LaVO₄:Eu³⁺ ; YAsO₄:Eu³⁺ ; LaAsO₄:Eu³⁺ ; Ca₅(VO₄)₃Cl ; Mg₈Ge₂OₙF₂:Mn4⁺ ; CaY₂ZrO₆:Eu3⁺ ; Mg₃SiO₃F₄:Ti4⁺ ;
- les silicates, notamment : CaSiO₃:Ce³⁺ ; CaSiO₃:Eu2⁺ ; CaSiO₃:Pb²⁺ ; CaSiO₃:Ti4⁺ ; CaSiO₃:Pb²⁺,Mn²⁺ ; Be₂SiO₄:Mn2⁺ ; Mg₂SiO₄:Mn²⁺ ; Zn₂SiO₄:Mn2⁺ ; Zn₂SiO₄:Mn2⁺,P ; Zn₂SiO₄:Mn2⁺,As⁵⁺ ; Zn₂SiO₄:Ti4⁺ ; (Zn+Be)₂SiO₄:Mn2⁺ ; Sr₂SiO₄:Eu2⁺ ; SrBaSiO₄:Eu²⁺ ; Ba₂SiO₄:Eu²⁺ ; Ba₂SiO₄:Ce³⁺,Li⁺,Mn2⁺ ; BaSi₂O₅:Eu²⁺ ; BaSi₂O₅:Pb²⁺ ; Y₂SiO₅:Ce³⁺ ; CaMgSi₂O₆:Eu2⁺ ; CaMgSi₂O₆:Eu²⁺,Mn²⁺ ; Ca₂MgSi₂O₇:Eu²⁺ ; Ca₂MgSi₂O₇ ; Ca₂MgSi₂O₇:Eu²⁺,Mn²⁺ ; Sr₂MgSi₂O₇:Eu²⁺ ; Ba₂MgSi₂O₇:Eu²⁺ ; BaMg₂Si₂O₇:Eu²⁺ ; BaSrMgSi₂O₇:Eu²⁺ ; Ba₂Li₂Si₂O₇:Eu²⁺ ; Ba₂Li₂Si₂O₇:Sn²⁺ ; Ba₂Li₂Si₂O₇:Sn²⁺,Mn²⁺ ; MgSrBa₂Si₂O₇:Eu²⁺ ; MgBa₃Si₂O₈:Eu²⁺ ; MgSr₃Si₂O₈:Eu²⁺,Mn²⁺ ; Sr₃MgSi₂O₈:Eu²⁺ ; Ca₅B₂SiO₁₀:Eu³⁺ ; Ca₃Al₂Si₃O₁₂:Eu2⁺ ; LiCeBa₄SiqO₁₄:Mn2⁺ ; LiCeSrBa₃SuiO₁₄:Mn²⁺ ;
- les halosilicates, notamment : LaSiO₃Cl:Ce³⁺ ; LaSiO₃Cl:Ce³⁺,Tb³⁺ ; Ca₃SiO₄Cl₂:Pb²⁺ ; Ca₃SiO₄Cl₂:Eu²⁺ ; Ba₅SiO₄C₁₆:Eu²⁺ ; Sr₅Si₄O₁₀Cl₆:Eu²⁺ ;
- les phosphates, notamment : YPO₄:Ce³⁺ ; YPO₄:Ce³⁺,Tb³⁺ ; YPO₄:Eu³⁺ ; YPO₄:Mn²⁺,Th⁴⁺ ; YPO₄:V⁵⁺ ; LaPO₄:Ce³⁺ ; LaPO₄:Eu³⁺ ; CaP₂O₆:Mn²⁺ ; Sr₂P₂O₇:Sn²⁺ ; Ca₂P₂O₇:Ce³⁺ ; Ca₂P₂O₇:Eu²⁺,Mn²⁺ ; Ca₂P₂O₇:Eu²⁺ ; Li₂CaP₂O₇:Ce³⁺,Mn²⁺ ; MgCaP₂O₇:Mn²⁺ ; BaTiP₂O₇ ; MgSrP₂O₇:Eu²⁺ ; MgBaP₂O₇:Eu²⁺ ; MgBaP₂O₇:Eu²⁺,Mn²⁺ ; β-Ca₃(PO₄)₂:Ce³⁺ ; CaB₂P₂O₉:Eu²⁺ ; α-Ca₃(PO₄)₂:Sn²⁺ ; β-Ca₃(PO₄)₂:Sn²⁺ ; α-Ca₃(PO₄)₂:Pb²⁺ ; α-Ca₃(PO₄)₂:Tl⁺ ; α-Ca₃(PO₄)₂:Ce³⁺ ; a-Ca₃(PO₄)₂:Eu²⁺ ; β-Ca₃(PO₄)₂:Eu²⁺ ; β-Ca₃(PO₄)₂:Eu²⁺,Mn²⁺ ; β-Sr₃(PO₄)₂:Sn²⁺,Mn²⁺ ; β-Sr₃(PO₄)₂:Sn²⁺ ; β-Sr₃(PO₄)₂:Eu²⁺ ; Ba₃(PO₄)₂:Eu²⁺ ; Na₃Ce(PO₄)₂:Tb³⁺ ; β-(Ca,Sr)₃(PO₄)₂:Sn²⁺,Mn²⁺ ; ZnMg₂(PO₄)₂:Mn²⁺ ; Zn₃(PO₄)₂:Mn²⁺ ; (Zn,Mg)₃(PO₄)₂:Mn²⁺ ; Mg₃Ca₃(PO₄)₄:Eu²⁺ ; MgSr₅(PO₄)₄:Sn²⁺ ; MgBa₂(PO₄)₂:Sn²⁺ ; CaSr₂(PO₄)₂:Bi³⁺ ; Sr₂P₂O₇:Eu²⁺ ;
- les halophosphates, notamment : Ca₅(PO₄)₃F:Mn²⁺ ; Ca₅(PO₄)₃F:Sb³⁺ ; Ca₅(PO₄)₃F:Sn²⁺ ; Ca₅(PO₄)₃Cl:Eu²⁺ ; Ca₅(PO₄)₃Cl:Mn²⁺ ; Ca₅(PO₄)₃Cl:Sb³⁺ ; Ca₅(PO₄)₃Cl:Sn²⁺ ; Sr₅(PO₄)₃Cl:Eu²⁺ ; Sr₅(PO₄)₃Cl:Mn²⁺ ; Sr₅(PO₄)₃Cl:Sb³⁺ ; Sr₅(PO₄)₃F:Mn²⁺ ; Sr₅(PO₄)₃F:Sb³⁺ ; Sr₅(PO₄)₃F:Sb³⁺,Mn²⁺ ; Sr₅(PO₄)₃Cl:Eu²⁺,Pr³⁺ ; Sr₅(PO₄)₃F:Sn²⁺ ; Ba₅(PO₄)₃Cl:Eu²⁺ ; Ca₂Ba₃(PO₄)₃Cl:Eu²⁺ ;
- les borates, notamment : YBO₃:Ce³⁺ ; YBO₃:Eu³⁺ ; LaBO₃:Eu³⁺ ; β-SrO₃B₂O₃:Pb²⁺ ; β-SrO₃B₂O₃:Pb²⁺,Mn²⁺ ; SrO₃B₂O₃:Eu²⁺,Cl ; α-SrO₃B₂O₃:Sm²⁺ ; MgB₂O₄:Mn²⁺ ; MgYBO₄:Eu³⁺ ; CaB₂O₄:Mn²⁺ ; CaB₂O₄:Pb²⁺ ; CaYBO₄:Bi³⁺ ; CaYBO₄:Eu³⁺ ; CaLaBO₄:Eu³⁺ ; ZnB₂O₄:Mn²⁺ ; Ca₂B₂O₅:Mn²⁺ ; LaAlB₂O₆:Eu³⁺ ; CaLaB₃O₇:Ce³⁺,Mn²⁺ ; SrB₄O₇:Eu²⁺(F,Cl,Br) ; SrB₄O₇:Pb²⁺ ; SrB₄O₇:Pb²⁺,Mn²⁺ ; Cd₂B₆O₁₁:Mn²⁺ ; YAl₃B₄O₁₂:Ce³⁺ ; YAl₃B₄O₁₂:Bi³⁺ ; YAl₃B₄O₁₂:Eu³⁺ ; YAl₃B₄O₁₂:Eu³⁺,Cr3⁺ ; YAl₃B₄O₁₂:Th⁴⁺,Ce³⁺,Mn²⁺ ; YAl₃B₄O₁₂:Ce³⁺,Tb³⁺ ; LaAl₃B₄O₁₂:Eu³⁺ ; BaB₈O₁₃:Eu²⁺ ; SrB₈O₁₃:Sm²⁺ ; Ca₂B₅O₉Cl:EU²⁺ ; Ca₂B₅O₉Cl:Pb²⁺ ; Ca₂B₅O₉Br:Eu²⁺ ; Sr₂B₅O₉Cl:Eu²⁺ ; CaYB_{0.8}O_{3.7}:Eu³⁺ ; La₂BO_{6.5}:Pb²⁺ ; YAl₃B₄O₁₂:Ce³⁺,Mn²⁺ ;
- les aluminates et les gallates, ; notamment : LiAlO₂:Fe³⁺ ; LiAlO₂:Mn²⁺ ; YAlO₃:Ce³⁺ ; YAlO₃:Eu³⁺ ; YAlO₃:Sm³⁺ ; YAlO₃:Tb³⁺ ; LaAlO₃:Eu³⁺ ; LaAlO₃:Sm³⁺ ; MgAl₂O₄:Mn2⁺ ; MgGa₂O₄:Mn²⁺ ; CaAl₂O₄:Mn²⁺ ; CaAl₂O₄:Eu²⁺ ; ZnAhO₄:Mn²⁺ ; ZnGa₂O₄:Mn²⁺ ; CaGa₂O₄:Mn²⁺ ; CaGa₄O₇:Mn²⁺ ; SrAl₂O₄:Eu²⁺ ; BaAl₂O₄:Eu²⁺ ; CaAl₄O₇:Pb²⁺,Mn²⁺ ; LiAl₅O₈:Fe³⁺ ; LiAl₅O₈:Mn²⁺ ; Y₄Al₂O₉:Eu³⁺ ; Y₃Al₅O₁₂:Ce³⁺ ; KAl₁₁O₁₇:Tl⁺ ; KGa₁₁O₁₇:Mn²⁺ ; BaMgAl₁₀O₁₇:Ce³⁺ ; Y₃Al₅O₁₂:Eu³⁺ ; BaMgAl₁₀O₁₇:Eu²⁺ ; BaMgAl₁₀O₁₇:Eu²,Mn² ; Ca_{0.5}Ba_{0.5}Al₁₂O₁₉:Ce³,Mn² ; SrAl₁₂O₁₉:Eu²⁺,Mn²⁺ ; SrGa₁₂O₁₉:Mn2⁺ ;SrAl₁₂O₁₉:Ce³⁺,Mn²⁺ ;
- les molybdates et les tungstates, notamment : CaMoO₄:Sm³⁺,Eu³⁺,Tb³⁺ ; SrMoO₄:Sm³⁺,Dy3⁺,Eu³⁺,Tb³⁺ ; MgWO₄:Eu³⁺,Tb³⁺ ; CaWO₄:Eu³⁺,Tb³⁺ ; Ca₃WO₆: Eu³⁺,Tb³⁺ ; Sr₃WO₆: Eu,³⁺Tb³⁺ ; Ba₃WO₆:Eu³⁺ ; La₂W₃O₁₂:Eu³⁺ ;
- les halogénures et oxyhalides, notamment : MgF₂:Mn²⁺ ; CaF₂:Ce³⁺ ; CaF₂:Eu²⁺ ; CaF₂:Mn²⁺ ; CaF₂:Ce³⁺,Mn²⁺ ; CaF₂:Ce³⁺,Tb³⁺ ; CaCl₂:Eu2⁺ dans SiO₂ ; CaCl₂:Eu²⁺,Mn²⁺ dans SiO₂ ;CaBr₂:Eu²⁺ dans SiO₂ ;CaI₂:Eu²⁺ dans SiO₂ ; CaI₂:Eu²⁺,Mn²⁺ dans SiO₂ ;SrF₂:Eu²⁺ ; SrCl₂:Eu²⁺ dans SiO₂ ; Sr(Cl,Br,I)₂:Eu²⁺ dans SiO₂ ;ZnF₂:Mn2⁺ ; BaₓSr₁₋ₓF₂:Eu²⁺ ; YF₃:Mn²⁺ ; YF₃:Mn²⁺,Th⁴⁺ ; KMgF₃:Eu²⁺ ; KMgF₃:Mn2⁺ ; LiAlF₄:Mn²⁺ ; K₂SiF₆:Mn⁴⁺ ; YOBr:Eu³⁺ ; YOCl:Ce³⁺ ; YOCl:Eu³⁺ ; YOF:Eu³⁺ ; YOF:Tb³⁺ ; LaOF:Eu³⁺ ; LaOCl:Bi³⁺ ; LaOCl:Eu³⁺ ;
- les sulfates et les sulfites, notamment : MgSO₄:Eu2⁺ ; MgSO₄:Pb²⁺ ; CaSO₄:Eu²⁺,Mn²⁺ ; CaSO₄:Pb²⁺ ; CaSO₄:Bi; CaSO₄:Ce³⁺ ; CaSO₄:Ce³⁺,Mn²⁺ ; CaSO₄:Eu²⁺ ; SrSO₄:Bi; SrSO₄:Ce³⁺ ; SrSO₄:Eu²⁺,Mn²⁺ ; SrSO₄:Eu²⁺ ; BaSO₄:Ce³⁺ ; BaSO₄:Eu²⁺ ; MgBa(SO₄)₂:Eu²⁺ ; Mg₂Ca(SO₄)₃:Eu²⁺ ; Mg₂Ca(SO₄)₃:Eu²⁺,Mn²⁺ ; Mg₂Sr(SO₄)₃:Eu²⁺ ; ZnS:Ag⁺,Cl⁻ ; ZnS:Au,In; ZnS:Cu,Sn ; ZnS:Cu⁺,Al³⁺ ; ZnS:Eu²⁺ ; ZnS:Mn²⁺ ; ZnS:Mn²⁺,Te²⁺ ; ZnS:P ; ZnS:P³⁻,Cr ; ZnS:Pb²⁺ ; ZnS:Pb²⁺,Cl⁻ ; ZnS:Pb,Cu; ZnS:Sn²⁺ ; ZnS:Sn,Ag ; ZnS:Sn²⁺,Li⁺ ; ZnSe:Cu⁺,Cl ; CdS:Ag⁺,Cl⁻ ; CdS:In; ZnS-CdS:Cu,I ; ZnS-CdS ; ZnS-CdS:Ag,Br,Ni ; ZnS-CdS:Ag⁺,Cl ; ZnS-CdS:Cu,Br ; ZnS-ZnTe:Mn ; MgS:Eu2⁺ ; CaS:Bi³⁺ ; CaS:Bi³⁺,Na ; CaS:Ce³⁺ ; CaS:Cu⁺,Na⁺ ; CaS:Eu2⁺ ; CaS:Mn²⁺ ; CaS:La³⁺ ; CaS:Pb²⁺,Cl ; CaS:Pb²⁺ ; CaS:Pb²⁺,Mn²⁺ ; CaS:Pr³⁺,Pb²⁺,Cl ; CaS:Sb³⁺ ; CaS:Sb³⁺,Na ; CaS:Sm³⁺ ; CaS:Sn²⁺ ; CaS:Sn²⁺,F ; CaS:Tb³⁺ ; CaS:Tb³⁺,Cl ; CaS:Y³⁺ ; CaS:Yb²⁺ ; CaS:Yb²⁺,Cl ; SrS:Ce³⁺ ; SrS:Cu⁺,Na ; SrS:Eu²⁺ ; SrS:Mn²⁺ ; BaS:Au,K ; CaGa₂S₄:Ce³⁺ ; CaGa₂S₄:Eu2⁺ ; CaGa₂S₄:Mn²⁺ ; CaGa₂S₄:Pb²⁺ ; ZnGa₂S₄:Mn²⁺ ; ZnBa₂S₃:Mn ; SrAl₂S₄:Eu²⁺ ; SrGa₂S₄:Pb²⁺ ; BaAl₂S₄:Eu2⁺ ; SrGa₂S₄:Ce²⁺ ; SrGa₂S₄:Eu²⁺ ; BaGa₂S₄:Ce³⁺ ; BaGa₂S₄:Eu²⁺ ; Y₂O₂S:Eu³⁺ ; Y₂O₂S:Tb³⁺ ; Gd₂O₂S:Tb³⁺.

Le luminophore peut également être choisi dans le groupe comprenant les composés organo-lanthanides (comme par exemple l'Europium (III) thenoyltrifluoroacetonate) et les composés organiques luminescents (comme par exemple la rhodamine B et la fluorescéine) encapsulés dans une matrice inorganique (comme par exemple la silice SiO₂).

Les particules de luminophore présentent une taille avantageusement comprise entre 1 nanomètre et 20 micromètres, plus avantageusement entre 10 et 50 nanomètres.

Outre les particules de luminophore, l'encre de marquage comprend également un absorbeur métallique nanométrique.

Le rapport massique luminophore/absorbeur de l'encre de marquage est avantageusement compris entre 100 et 1, plus avantageusement entre 50 et 5.

Comme déjà indiqué, l'absorbeur est de taille nanométrique et de nature métallique. Ces caractéristiques diminuent le point de frittage de l'absorbeur, permettant ainsi un marquage à de faibles températures. De préférence, les nanoparticules métalliques ont un point de frittage inférieur à 400°C.

Les particules d'absorbeur peuvent également agir en tant que liant de l'encre. Par liant, on entend la capacité à lier les particules de luminophores entre elles d'une part et avec le substrat à marquer d'autre part.

Les nanoparticules métalliques constituant l'absorbeur présentent une taille avantageusement comprise entre 1 et 100 nanomètres, plus avantageusement entre 5 et 20 nm.

La taille des particules de luminophore ou des nanoparticules métalliques constituant l'absorbeur est mesurée selon les techniques conventionnelles connues de l'homme du métier.

L'absorbeur peut notamment être réalisé en un matériau choisi dans le groupe comprenant l'étain, l'argent, le nickel, le cuivre, l'or, et le zinc.

L'encre de marquage peut également comprendre du carbone, sous forme nanométrique, comme du noir de carbone de taille avantageusement inférieure à 100 nanomètres et avantageusement supérieure à 10 nanomètres.

L'encre de marquage comprend également un solvant. Il s'agit d'un solvant véhicule permettant de faciliter le dépôt de l'encre.

Le solvant de l'encre peut notamment être l'eau (encre aqueuse). Il peut également s'agir d'un mélange d'eau et de solvant organique, ou d'un solvant organique.

Le solvant organique peut notamment être choisi dans le groupe comprenant le dichlorobenzène, le chloroforme, le méthyl éthyle cétone, l'éthanol, l'acétone, le méthanol, le méthyl lactate, le cyclohexanone, le 3-ethoxy propionate d'éthyle...

Néanmoins, le solvant est avantageusement l'eau.

L'encre de marquage peut également comprendre au moins un additif tel qu'un colorant ou un pigment.

Le colorant peut notamment être choisi dans le groupe comprenant le chromate(1-), bis[ 1 - [2- [5-(1,1 -dimethylpropyl)-2-(hydroxy-kO)-3-nitrophenyl]diazenyl-kN1]-2-naphthalenolato(2-)-kO]-, sodium (1:1) ), le (chromate(1-), (1-((2-(hydroxy-kappaO)-4-nitrophenyl)azo-kappaN1)-2-naphthalenolato(2-)-kappaO)(1-((2-(hydroxy-kappaO)-5-nitrophenyl)azo-kappaN1)-2-naphthalenolato(2-)-kappaO)-, sodium ), le chromate(1 ),bis[1-[2-[2-(hydroxy-kO)-4-nitrophenyl]diazenyl-kN1]-2 naphthalenolato(2-)-kO]-, sodium (1:1), les amines en C₁₂-C₁₄-tert-alkyl, avec 1-5-(1,1-dimethylpropyl)-2-hydroxy-3-nitrophenylazo-2-naphthalenol 1-2-hydroxy-4(or 5)-nitrophenylazo-2-naphthalenol complexe de chrome.

Le pigment peut notamment être choisi dans le groupe comprenant le noir de carbone, l'oxyde de fer, le noir d'acétylène (acétylène black), le noir d'Ivoire (black d'Ivoire), le bleu cobalt, le bleu oxyde de manganèse, le chrome vert, le chrome jaune...

L'additif représente avantageusement 0.5 à 10 % en poids par rapport au poids de l'encre de marquage, plus avantageusement 1 à 3 % en poids.

Comme déjà indiqué, l'encre est dépourvue de matériau de fritte. De manière générale, un matériau de fritte est un mélange comprenant au moins un oxyde acide tel que la silice ; au moins un oxyde basique tel que les composés choisis dans le groupe des oxydes métalliques tels que Li₂O, Na₂O, K₂O, CaO, MgO, ZnO, PbO, et BaO par exemple ; et éventuellement un oxyde neutre tel que l'alumine Al₂O₃.

Dans un matériau de fritte, l'oxyde acide permet la formation d'un réseau, alors que l'oxyde basique permet d'abaisser la température de fusion par formation d'un eutectique. L'oxyde basique est aussi appelé fondant. En outre, l'oxyde neutre est un agent visqueux.

Un matériau de fritte est obtenu selon une technique connue de l'homme du métier en mélangeant les deux ou trois types de composés précédemment cités, en les chauffant à une température élevée, souvent supérieure à 1000°C, de manière à obtenir un mélange homogène. Le mélange est ensuite refroidi subitement par trempe. Le verre ainsi obtenu est broyé pour donner la fritte.

La présente invention concerne un procédé de marquage, selon lequel l'encre de marquage est déposée sur un substrat, puis fixée par traitement thermique.

Ce procédé permet de fixer les particules de luminophore de manière définitive sur un substrat qui peut être un objet fini, c'est-à-dire un objet prêt à être commercialisé sans modification ultérieure.

De manière générale, le marquage est réalisé sur un substrat pouvant être en métal, ou en plastique ou en céramique.

De manière avantageuse, le substrat en métal est en matériau pouvant être choisi dans le groupe comprenant l'aluminium ; l'or ; le cuivre ; l'acier inoxydable ; le titane ; la fonte ; leurs oxydes ; et leurs alliages.

De manière avantageuse, le plastique peut notamment être choisi dans le groupe comprenant le polyéthylène téréphtalate (PET) ; l'acrylonitrile butadiène styrène (ABS), et le poly(chlorure de vinyle) (PVC).

De manière avantageuse, la céramique peut être choisie dans le groupe des céramiques alumineuses dans lesquelles le constituant principal est l'alumine (Al₂O₃).

Comme déjà indiqué, le marquage comprend deux étapes principales : le dépôt de l'encre et la fixation de luminophore.

L'encre peut être déposée par les techniques conventionnelles, notamment par pulvérisation ou par impression.

La pulvérisation peut être automatisée ou manuelle, par exemple au moyen d'un aérographe. L'impression peut être réalisée avec une imprimante à jet d'encre.

Le dépôt peut être réalisé de manière uniforme sur le substrat, par exemple sous la forme d'une couche ayant une épaisseur et une distribution de luminophore homogènes. Il peut également être réalisé de manière à définir un motif spécifique, par exemple un motif de traçabilité ou un motif décoratif. Le motif de traçabilité peut notamment être un QR code, une Datamatrix, ou des codes-barres.

La fixation du luminophore est assurée par application d'un traitement thermique.

L'énergie nécessaire à la fixation du luminophore peut être issue de diverses sources, par exemple l'exposition à une source de chaleur (plaque chauffante, pistolet chauffant...), ou de l'énergie électromagnétique (laser).

Selon un mode de réalisation particulier, l'encre est fixée avec un laser YAG:Nd dont la longueur d'onde est 1064 nanomètres. La longueur d'onde du laser correspond à la longueur d'onde à laquelle absorbent les nanoparticules d'absorbeur.

Le laser peut être utilisé en mode continu (rayonnement ininterrompu) ou en mode discontinu.

La puissance générée par le laser est avantageusement comprise entre 5 et 50 watts, plus avantageusement entre 20 et 30 watts.

Quoiqu'il en soit, l'homme du métier saura faire appel à ses connaissances générales pour choisir le traitement thermique, et éventuellement la nature du laser en fonction du marquage à réaliser.

De manière générale, le traitement thermique peut être réalisé à une température comprise entre 50 et 400°C, plus avantageusement entre 100 et 200°C.

En outre, la durée du traitement thermique peut être comprise entre 1 minute et 60 minutes, plus avantageusement entre 10 minutes et 30 minutes.

Lors du traitement thermique, l'énergie est captée par l'absorbeur, dont la taille nanométrique et la nature métallique permettent de diminuer la quantité d'énergie nécessaire au marquage. Ainsi, les propriétés du luminophore sont moins susceptibles d'être détériorées par rapport aux procédés de frittage de l'art antérieur. En outre, le procédé de marquage peut ainsi être mis en œuvre grâce à des équipements à basse consommation d'énergie.

Lors de la fixation de l'encre, le traitement thermique permet le frittage des nanoparticules métalliques d'absorbeur, mais aussi le chauffage du substrat. Ces deux phénomènes simultanés permettent d'améliorer l'accroche des particules de luminophore sur le substrat. Ainsi, le marquage se fond dans le substrat, et devient partie intégrante de l'objet, ce qui rend la contrefaçon d'un tel objet très difficile.

La présente invention procure l'avantage de pouvoir marquer un objet lors de sa fabrication.

Plus précisément, le procédé de marquage peut être mis en œuvre avec le même appareillage que celui utilisé dans les techniques de fabrication additive comme l'impression tridimensionnelle. En effet, le même type de laser peut être utilisé pour le marquage et pour la fabrication additive. Le procédé de marquage peut donc être intégré au procédé de fabrication d'un objet, généralement à l'issue de la fabrication. Dans ce cas, il s'agit d'un procédé de fabrication d'un objet comprenant les étapes suivantes :
- fabrication additive d'un objet, avantageusement par impression tridimensionnelle ;
- marquage de l'objet selon l'invention,
ces deux étapes étant réalisées au moyen d'un même dispositif, avantageusement un laser.

De manière générale, une machine d'impression tridimensionnelle peut comprendre un laser ayant une émission dans l'infrarouge, avantageusement centrée entre 940 et 1064 nanomètres, ce qui est compatible avec l'étape de fixation du luminophore.

Lors de la réalisation d'un objet par fabrication additive (impression tridimensionnelle par exemple), le dépôt de l'encre peut être réalisé, soit à l'intérieur du dispositif de fabrication additive, soit à l'extérieur. Ensuite, le luminophore est fixé grâce au laser du dispositif de fabrication additive, par exemple le laser d'une imprimante tridimensionnelle.

La fabrication additive par impression tridimensionnelle peut être du type frittage sélectif laser (SLS). Ce type de technique est particulièrement adapté pour être combiné au marquage selon l'invention.

De manière générale, le frittage sélectif laser permet de former un objet en chauffant, à l'aide d'un laser et de manière séquentielle, des couches fines de particules de matériau, par exemple des particules de plastique, de métal, ou de céramique. L'objet est ainsi formé couche après couche.

L'invention et les avantages qui en découlent ressortiront mieux des figures et exemples suivants donnés afin d'illustrer l'invention et non de manière limitative.

### DESCRIPTION DES FIGURES

La figure 1 correspond au spectre d'émission d'un marquage selon l'invention sur un substrat en aluminium.
La figure 2 correspond au spectre d'émission d'un marquage selon l'invention sur un substrat en or.
La figure 3 correspond au spectre d'émission d'un marquage selon l'invention sur un substrat en cuivre.
La figure 4 correspond au spectre d'émission d'un marquage selon l'invention sur un substrat en acier inoxydable.
La figure 5 correspond au spectre d'émission d'un marquage selon l'invention sur un substrat en plastique.
La figure 6 correspond au spectre d'émission d'un marquage selon l'invention sur un substrat en céramique.
La figure 7 correspond au spectre d'émission d'un marquage selon l'invention sur un substrat en aluminium et sur un substrat en titane.
La figure 8 correspond au spectre d'émission d'un marquage selon l'invention sur une plaquette de frein.
La figure 9 correspond au spectre d'émission d'un marquage selon l'invention sur un substrat métallique obtenu par impression tridimensionnelle.

### EXEMPLES DE REALISATION DE L'INVENTION

Dix exemples de marquage ont été réalisés à partir des formulations d'encre El à E4 décrites dans le tableau 1.

**Tableau 1 : Formulations d'encre El à E4**

| encre | nanoparticules | luminophore | pigment | solvant |
|---|---|---|---|---|
| El | CuS 0.010 g | SrMoO₄:Eu,Tb 0.50 g | - | 1,3-dichlorobenzène 14 g |
| E2 | Sn 0.15 g | SrMoO₄:Eu,Tb 1.02 g | carbone 0.052 g | eau 15.01 g |
| E3 | Ag 0.15 g | SrMoO₄:Eu,Tb 1.01 g | carbone 0.050 g | eau 15.01 g |
| E4 | Ni | SrMoO₄:Eu,Tb 1.02 g | carbone 0.052 g | eau 15.01 g |

Les encres El à E4 ont été préparées par mise en solution des différents constituants, suivie d'une agitation en présence de billes de zirconium de 0.9 millimètre de diamètre pendant 12 heures à la température ambiante.

Les nanoparticules de CuS de l'encre El ont été synthétisées selon la littérature (Adv. Funct. Mater. 2013, 23, 1256-1264). Elles présentent une taille de 5 à 10 nanomètres et un maximum d'absorption entre 1044 et 1129 nanomètres.

Les nanoparticules de Sn de l'encre E2 ont été obtenues auprès de Sigma Aldrich. Elles présentent une taille inférieure à 100 nanomètres.

Les nanoparticules d'Ag de l'encre E3 ont été obtenues auprès de Sigma Aldrich. Elles présentent une taille inférieure à 100 nanomètres.

Les nanoparticules de Ni de l'encre E4 ont été obtenues auprès de Sigma Aldrich. Elles présentent une taille inférieure à 100 nanomètres.

Le luminophore SrMoO₄ dopé Eu et Tb des encres El à E4 correspond à des nanoparticules qui ont été synthétisées selon la littérature (Materials Research Bulletin, 2011, 46, 33-339). Elles présentent une taille comprise entre 10 et 200 nanomètres.

Le carbone des encres E2 à E4 est du noir de carbone, carbon 1800 emperor commercialisé par la société Cabot.

Le marquage de différents types de substrat a été réalisé selon les étapes suivantes :
- préparation d'une encre El à E4 ;
- dépôt de l'encre sur le substrat (pulvérisation manuelle, jet d'encre ou pulvérisation avec un aérographe) ;
- fixation de l'encre sur le substrat par traitement thermique (laser ou plaque chauffante).

Le tableau 2 résume les différents essais réalisés.

**Tableau 2 : Exemples de marquage selon l'invention à partir des encres El à E4**

| exemple | encre | substrat | dépôt | fixation |
|---|---|---|---|---|
| 1 (figure 1) | El | aluminium | pulvérisation manuelle | laser 1064nm ; 34mm/s ; 40W |
| 2 (figure 2) | El | or | pulvérisation manuelle | laser 1064nm ; 34mm/s ; 40W |
| 3 (figure 3) | E2 | cuivre | pulvérisation manuelle | laser 1064nm ; 34mm/s ; 50W |
| 4 (figure 4) | E3 | acier inoxydable | jet d'encre | laser 1064nm ; 34mm/s ; 50W |
| 5 (figure 5) | E3 | PET | jet d'encre | laser 1064nm ; 200mm/s ; 5W |
| 6 (figure 6) | E3 | céramique (alumine) | jet d'encre | laser 1064nm ; 100mm/s ; 15W |
| 7 (figure 7) | E3 | aluminium | jet d'encre | plaque chauffante 15 minutes à 250°C |
| 8 (figure 7) | E3 | titane | jet d'encre | plaque chauffante 15 minutes à 250°C |
| 9 (figure 8) | E4 | fonte | pulvérisation manuelle | laser 1064nm ; 34mm/s ; 15W |
| 10 (figure 9) | E3 | métal | pulvérisation aérographe | laser 1064nm ; 34mm/s ; 30W |

Le PET est le polyéthylène téréphtalate.

Le laser utilisé pour fixer les encres El à E4 a une longueur d'onde de 1064nm. La vitesse de balayage du laser et la puissance utilisées sont indiquées dans le tableau 2. Dans les exemples 4 à 8, l'encre E3 a été déposée avec une imprimante jet d'encre (Dimatix).

Dans les exemples 7 et 8, la fixation a été réalisée en plaçant les substrats sur une plaque chauffante.

Le marquage des exemples 4 à 8 résiste à différents types de solvants. Il résiste également à de fortes températures (au moins 1000°C pendant 4 heures) lorsqu'il est réalisé sur un substrat métallique. Ce marquage est de très bonne qualité, que ce soit au niveau visuel ou au niveau du toucher.

Le substrat de l'exemple 9 correspond à des plaquettes de frein de voiture.

Le substrat de l'exemple 10 correspond à un objet métallique. Il a été imprimé par fabrication additive avec la machine Prox200 de 3D Systems.

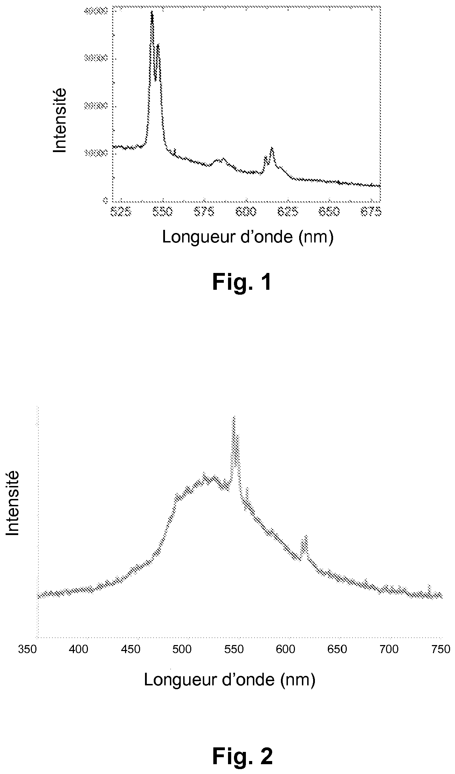

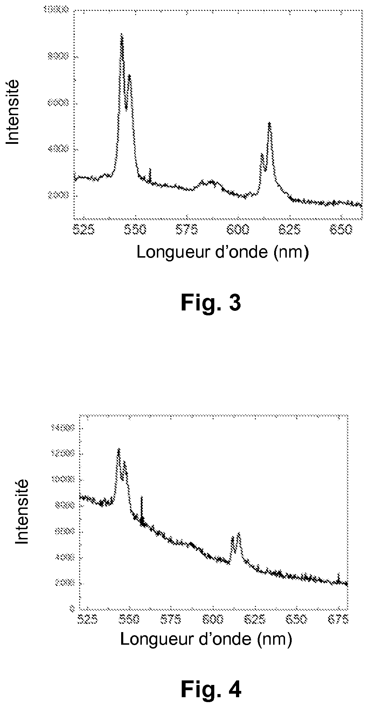

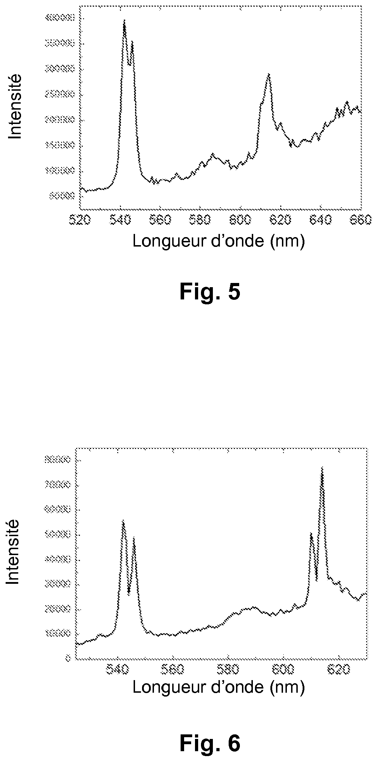

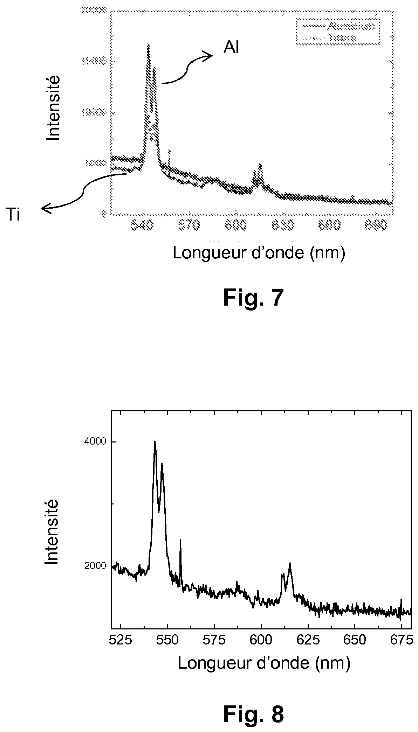

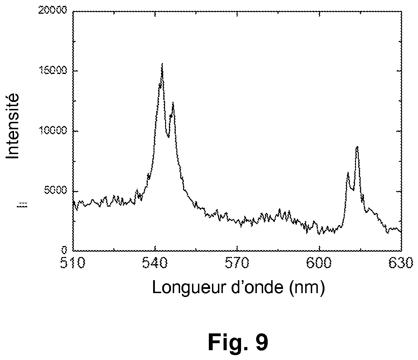

Les figures 1 à 9 illustrent les spectres d'émission des substrats marqués, après excitation à une longueur d'onde de 260 nanomètres.

Les motifs de marquage des exemples 1 à 9 sont visibles sous la lumière ambiante et sous rayonnement ultraviolet.

## Revendications

1. Procédé de marquage selon les étapes suivantes :
- dépôt d'une encre de marquage sur un substrat, l'encre de marquage comprenant :
▪ des particules d'au moins un luminophore ;
▪ au moins un absorbeur constitué de nanoparticules métalliques ;
▪ un solvant ;
▪ l'encre de marquage étant dépourvue de matériau de fritte ;
▪ l'encre présentant un rapport massique luminophore/absorbeur compris 100 et 1 ;
- fixation du au moins un luminophore de l'encre de marquage par traitement thermique.

2. Procédé de marquage selon la revendication 1, ***caractérisé* en ce que** le substrat est en métal, en plastique ou en céramique.

3. Procédé de marquage selon la revendication 1 ou 2, ***caractérisé* en ce que** l'encre est déposée par pulvérisation ou par impression.

4. Procédé de marquage selon l'une des revendications 1 à 3, ***caractérisé* en ce que** le traitement thermique est réalisé à une température comprise entre 50 et 400°C.

5. Procédé de marquage selon l'une des revendications 1 à 4, ***caractérisé* en ce que** le traitement thermique est réalisé à une température comprise entre 100 et 200°C.

6. Procédé de marquage selon l'une des revendications 1 à 5, ***caractérisé* en ce que** le luminophore est choisi dans le groupe comprenant les oxydes, les silicates, les halosilicates, les phosphates, les halophosphates, les borates, les aluminates, les gallates, les molybdates, les tungstates, les halogénures, les oxyhalides, les sulfates, les sulfites, les composés organo-lanthanides, et les composés organiques luminescents encapsulés dans une matrice inorganique.

7. Procédé de marquage selon l'une des revendications 1 à 6, ***caractérisé* en ce que** le luminophore se présente sous le forme de particules ayant une taille comprise entre 1 nanomètre et 20 micromètres.

8. Procédé de marquage selon l'une des revendications 1 à 7, ***caractérisé* en ce que** les nanoparticules métalliques constituant l'absorbeur présentent une taille comprise entre 1 et 100 nanomètres.

9. Procédé de marquage selon l'une des revendications 1 à 8, ***caractérisé* en ce que** l'absorbeur est en un matériau choisi dans le groupe comprenant l'étain, l'argent, le nickel, le cuivre, l'or, et le zinc.

10. Procédé de fabrication d'un objet comprenant les étapes suivantes :
- fabrication additive d'un objet ;
- marquage de l'objet selon l'une des revendications 1 à 9 ;
ces deux étapes étant réalisées au moyen d'un même dispositif, avantageusement un laser.

11. Procédé selon la revendication 10, ***caractérisé* en ce que** la fabrication additive de l'objet est réalisée par impression tridimensionnelle.

12. Procédé selon la revendication 10 ou 11, ***caractérisé* en ce que** le dispositif de fabrication additive et de marquage de l'objet est un laser.

13. Procédé selon la revendication 12, ***caractérisé* en ce que** le laser présente une émission dans l'infrarouge.

14. Procédé selon la revendication 13, ***caractérisé* en ce que** le laser présente une émission centrée entre 940 et 1064 nanomètres.

## Patentansprüche

1. Markierungsverfahren umfassend die folgenden Schritte:
- Abscheiden einer Markierungstinte auf einem Substrat, wobei die Markierungstinte enthält:
▪ Partikel mindestens eines Luminophors,
▪ mindestens einen durch metallische Nanopartikel gebildeten Absorber;
▪ ein Lösungsmittel;
▪ die Markierungstinte ist dabei frei von Frittenmaterial;
▪ wobei die Tinte ein Luminophor/ Absorber- Gewichtsverhältnis zwischen 100 und 1 aufweist;
- Fixieren mindestens eines Luminophors der Markierungstinte mittels thermischer Behandlung.

2. Markierungsverfahren nach Anspruch 1, ***dadurch gekennzeichnet, dass*** das Substrat aus Metall, Kunststoff oder Keramik besteht.

3. Markierungsverfahren nach Anspruch 1 oder 2, ***dadurch gekennzeichnet, dass*** die Tinte durch Zerstäuben oder durch Drucken abgeschieden wird.

4. Markierungsverfahren nach einem der Ansprüche 1 bis 3, ***dadurch gekennzeichnet, dass*** die Wärmebehandlung bei einer Temperatur zwischen 50 und 400° C durchgeführt wird.

5. Markierungsverfahren nach einem der Ansprüche 1 bis 4, ***dadurch gekennzeichnet, dass*** die Wärmebehandlung bei einer Temperatur zwischen 100 und 200° C durchgeführt wird.

6. Markierungsverfahren nach einem der Ansprüche 1 bis 5, ***dadurch gekennzeichnet, dass*** der Luminophor ausgewählt wird aus der Gruppe, zu der Oxide, Silikate, Halosilikate, Phosphate, Halophosphate, Borate, Aluminate, Gallate, Molybdate, Wolframate, Halogenide, Oxyhalide, Sulfate, Sulfite, organische Lanthanoidverbindungen und lumineszierende organische Verbindungen, eingebettet in eine anorganische Matrix, gehören.

7. Markierungsverfahren nach einem der Ansprüche 1 bis 6, ***dadurch gekennzeichnet, dass*** der Luminophor die Form von Partikeln mit einer Größe zwischen 1 Nanometer und 20 Mikrometer hat.

8. Markierungsverfahren nach einem der Ansprüche 1 bis 7, ***dadurch gekennzeichnet, dass*** die Metall- Nanopartikel, die den Absorber bilden, eine Größe zwischen 1 und 100 Nanometer haben.

9. Markierungsverfahren nach einem der Ansprüche 1 bis 8, ***dadurch gekennzeichnet, dass*** es sich bei dem Absorber um ein Material handelt, das ausgewählt wird aus der Gruppe mit Zinn, Silber, Nickel, Kupfer, Gold und Zink.

10. Herstellungsverfahren eines Gegenstandes, das die folgenden Schritte enthält:
- zusätzliche Herstellung eines Gegenstandes;
- Markieren des Gegenstandes nach einem der Ansprüche 1 bis 9 ; wobei diese beiden Schritte mittels derselben Vorrichtung hergestellt werden, vorteilhafterweise einem Laser.

11. Verfahren nach Anspruch 10, ***dadurch gekennzeichnet, dass*** die zusätzliche Herstellung des Gegenstandes durch 3D-Druck erfolgt.

12. Verfahren nach Anspruch 10 oder 11, ***dadurch gekennzeichnet, dass*** es sich bei der Vorrichtung zur zusätzlichen Herstellung und Markierung des Gegenstandes um einen Laser handelt.

13. Verfahren nach Anspruch 12, ***dadurch gekennzeichnet, dass*** der Laser eine Emission im Infrarotbereich aufweist.

14. Verfahren nach Anspruch 13, ***dadurch gekennzeichnet, dass*** der Laser eine zwischen 940 und 1064 Nanometern zentrierte Emission aufweist.

## Claims

1. Method of marking according to the following steps:
- deposition of marking ink on a substrate with said marking ink comprising:
▪ particles of at least one luminophore;
▪ at least one absorber consisting of metal nanoparticles;
▪ a solvent;
▪ the marking unit does not contain any sintering material;
▪ the ink has a luminophore/absorber mass ratio included between 100 and 1;
- attachment of at least one marking ink luminophore by heat treatment.

2. Method of marking according to claim *1, **characterized in that*** the substrate is of metal, plastic or ceramic.

3. Method of marking according to the claim 1 or 2, ***characterized in that*** the ink is deposited by pulverization or printing.

4. Method of marking according to one of claims 1 to 3, ***characterized in that*** the heat treatment is carried out at a temperature included between 50 and 400°C.

5. Method of marking according to one of claims 1 to 4, ***characterized in that*** the heat treatment is carried out at a temperature included between 100 and 200°C.

6. Method of marking according to one of claims 1 to 5, ***characterized in that*** the luminophore is chosen from the group comprising oxides, silicates, halo silicates, phosphates, halos phosphates, borates, aluminates, gallate, molybdates, tungstates, halogenides, oxyhalides, sulfates, sulfites, organo-lanthanide compounds, and luminescent organic compounds encapsulated in an inorganic matrix.

7. Method of marking according to one of claims 1 to 6, ***characterized in that*** le luminophore is in the form of particles with a size included between 1 nanometer and 20 micrometers.

8. Method of marking according to one of claims 1 to 7, ***characterized in that*** the metal nanoparticles make up the absorber having a size included between 1 and 100 nanometers.

9. Method of marking according to one of claims 1 to 8, ***characterized in that*** the absorber is of a material chosen from the group comprising tin, silver, nickel, copper, gold and zinc.

10. Method of manufacturing an object comprising the following steps:
- additive manufacturing of an object;
- marking of the object according to one of claims 1 to 9 ;
with these two steps being carried out using the same device, advantageously a laser.

11. Method according to the claim 10, ***characterized in that*** additive manufacturing of the object is carried out by three-dimensional printing.

12. Method according to the claim 10 or 11, ***characterized in that*** the additive manufacturing and marking device of the object is a laser.

13. Method according to the claim 12, ***characterized in that*** the laser has infrared emission capability.

14. Method according to the claim 13, ***characterized in that*** the laser has emission centered between 940 and 1064 nanometers.
